Europäisches Patentamt

European Patent Office

Office européen des brevets

(19)

(11) Veröffentlichungsnummer: **0 401 692**

**A2**

(12) **EUROPÄISCHE PATENTANMELDUNG**

(21) Anmeldenummer: **90110414.1**

(22) Anmeldetag: **01.06.90**

(51) Int. Cl.⁵: **F42C 13/02, G01S 17/46**

(30) Priorität: **05.06.89 DE 3918243**

(43) Veröffentlichungstag der Anmeldung:
**12.12.90 Patentblatt 90/50**

(84) Benannte Vertragsstaaten:
**DE FR IT SE**

(71) Anmelder: **DIEHL GMBH & CO.**
**Stephanstrasse 49**
**D-8500 Nürnberg(DE)**

(72) Erfinder: **Förtsch, Hans-Dieter**
**Rabensteinstrasse 34**
**D-8551 Egloffstein(DE)**
Erfinder: **Steger, Franz**
**Pirckheimer Strasse 12**
**D-8560 Lauf/Peg.(DE)**
Erfinder: **Siebert, Rainer**
**Kirchhoffstrasse 36**
**D-8505 Röthenbach/Peg.(DE)**

(54) **Optronischer Annäherungszünder.**

(57) Ein optronischer Triangulations-Annäherungs-zünder (11) soll für einfachen Endabgleich seines Zündabstandes (si) ausgelegt werden. Dafür ist im Strahlengang der Sende-Empfangs-Charakteristiken (20.1-20.2) eine Blende (29) zur Reduzierung des Strahlen-Querschnittes und damit zur Dämpfung (D) der zielentfernungsabhängigen Empfangsamplitude (A(s)) vorgesehen. Damit erfolgt eine Dämpfung (D) auf Überschreiten der Zündschwelle (Ai) gerade im vorgegebenen Zündabstand (si), nachdem zuvor eine mechanische Grobeinstellung von Sender (13) und/oder Empfänger (19) so erfolgte, daß die Zünd-schwelle (Ai) in gegenüber dem Nenn-Zündabstand (si) wesentlich größerer Justageentfernung (sj) über-schritten wurde. Als Blende (29) für diese Ansprech-dämpfung (D) dient vorzugsweise eine quer in die Empfangscharakteristik (20.2) eintauchende Nadel (30) an der Spitze einer Madenschraube (31), die dann in einer radialen Einsenkung (32) hinter der Zünder-Stirn (17) mittels einer Klebe- und Verguß-Masse (33) festgelegt wird. Durch diesen strahlen-geometrischen Dämpfungsabgleich der zuvor auf größere Justageentfernung (sj) grob abgeglichenen Ausrichtung von Sender (13) und Empfänger (19) erübrigt sich deren mechanischer Feinabgleich so-wie jeglicher Eingriff in die elektrische Zündsignal-Auslöseschaltung hinter dem Empfänger (19).

FIG.1

EP 0 401 692 A2

Die Erfindung betrifft einen optronischen Annäherungs-Zünder gemäß dem Oberbegriff des Anspruches 1.

Ein derartiger Zünder ist etwa aus der DE-OS 26 31 212 bekannt. Man kann zeigen, daß sich der dort in Fig. 1 skizzierte, quer zum Axial-Längsschnitt unsymmetrisch-rautenförmige Überlappungsbereich der Sende- und Empfangscharakteristiken dann und nur dann einstellt, wenn sich aufgrund hinreichend großer Basis ein relativ großer Schnittwinkel zwischen den Achsen der Sende- und der Empfangs-Charakteristiken ergibt und außerdem die Bündelungs- oder Öffnungswinkel der Sende- und Empfangscharakteristiken bei diesem Schnittwinkel nicht zu groß sind. Die Querschnittsabmessungen eines Zünders lassen aber oft die Realisierung einer großen Basis und den Aufbau einer Optik für starke Bündelung der Sende- und Empfangs-Charakteristiken nicht zu, so daß sich für den geforderten Auslöse-Entfernungsbereich nicht die in jener Vorveröffentlichung skizzierten geometrischen Verhältnisse einstellen, sondern ein in seiner Querabmessung über der Entfernung relativ konstanter Überlappungsbereich. Dann aber durchläuft das Empfangssignal mit Verringerung des Zielabstandes kein Maximum mehr, wie es bei der echten Triangulationspeilung mit rhombisch begrenztem Überlappungsbereich relativ eindeutig ausgewertet werden; vielmehr steigt die Empfangsamplitude in erster Näherung umgekehrt proportional mit dem Quadrat der Verringerung der (im Überlappungsbereich liegenden) Zielentfernung an, und das Zündsignal muß ausgelöst werden, wenn im Zündabstand die Reflektions-Amplitude eine schaltungstechnisch vorgegebene Zündschwelle überschreitet.

Zur Justage, um diese in der Praxis verschärften Anforderungen für das Ansprechen eines optronischen Abstandszünders gattungsgemäßer Art zu erfüllen, können Sender und Empfänger des Zünders derart gehaltert sein, daß sie in bezug zueinander und auf die Längsachse des Zünders mechanisch einstellbar und fixierbar sind. Eine solche Einstellung muß aber überaus feinfühlig vorgenommen und genau fixiert werden, wenn bestimmte strahlungsgeometrische Verhältnisse sichergestellt werden sollen, was einen ganz erheblichen Aufwand beim Justage-Schlußabgleich des fertigen Zünders bedingt.

In Erkenntnis dieser Gegebenheiten liegt der Erfindung die Aufgabe zugrunde, einen Zünder gattungsgemäßer Art derart auszugestalten, daß sich ein vereinfachter Schlußabgleich für die Justage des Ansprech-Abstandes realisieren läßt.

Diese Aufgabe ist erfindungsgemäß im wesentlichen dadurch gelöst, daß der gattungsgemäße Zünder gemäß dem Kennzeichnungsteil des Anspruches 1 ausgestattet ist.

Nach dieser Lösung braucht durch die grobe mechanische Justage von Sender und/oder Empfänger, die erschwert ist durch die engen Raumverhältnisse im Zünder und durch die großen Auswirkungen schon kleiner Verschiebungen auf die Strahlengeometrie der Sende-Empfangs-Charakteristiken, lediglich sichergestellt zu werden, daß in der Umgebung des angestrebten Zündabstandsbereiches die Empfangsamplitude oberhalb der Zündschwelle liegt. Um bei der Justage die tatsächliche Empfangsamplitude nicht meßtechnisch erfassen zu müssen, sondern das Zweipunkt-Ansprechverhalter der im Zünder ohnehin vorhandenen Zündsignal-Auslöseschaltung nutzen zu können, wird eine Ziel-Oberfläche repräsentierender Reflektor im Strahlengang-Überlappungsbereich zunächst jenseits der einzustellenden maximalen Zündentfernung positioniert und die Grob-Ausrichtung von Sender und Empfänger so vorgenommen, daß auf diese vergrößerte Entfernung die Ansprechschwelle der Auslöseschaltung überschritten wird, also ein Zündsignal geliefert wird. Dann ist diese Schwelle auch noch und erst recht überschritten, wenn die große Reflektor-Entfernung reduziert wird bis auf den kürzesten zulässigen Zündabstand vor dem optronischen Zünder. Nun wird ohne erneuten Eingriff in die Sender-Empfänger-Positionierung, sondern durch einfache mechanische Querschnittsbeschränkung im Sende-Empfangs-Strahlengang - vorzugsweise in der Empfangs-Charakteristik vor der Empfangs-Optik - eine Dämpfung der Empfangsamplitude auf die Ansprechamplitude der Zündauslöseschaltung bewirkt. Eine derartige Abblendung des Strahlenganges muß nicht durch eine symmetrisch zur Strahlachse wirkende einstellbare Blende erfolgen; es genügt ein seitlich in den Strahlgang eintauchendes Abblendelement, etwa in Form der Spitze einer quer zur Empfangscharakteristik in deren Strahlengang hineingesenkten Schraube.

Zusätzliche Alternativen und Weiterbildungen sowie weitere Merkmale und Vorteile der Erfindung ergeben sich aus den weiteren Ansprüchen und, auch unter Berücksichtigung der Darlegungen in der Zusammenfassung, aus nachstehender Beschreibung eines in der Zeichnung unter Beschränkung auf das Wesentliche stark abstrahiert skizzierten bevorzugten Realisierungsbeispiels zur erfindungsgemäßen Lösung. Es zeigt:

Fig. 1 im Axial-Längsschnitt, bei abgebrochener Darstellung der sich hinter ihm anschließenden Munition, einen optronischen Zünders, mit unterbrochener Darstellung des Sende-Empfangs-Strahlenganges zur Erläuterung der Verhältnisse bei der Justage des Annäherungszünders, und

Fig. 2 die Empfangsamplitude im Zünder in Abhängigkeit von der Ziel-Annäherung und unter Berücksichtigung der Kurven-Verschiebung aufgrund der Blenden-Dämpfung im Sende-Empfangs-Strahlengang des Zünders.

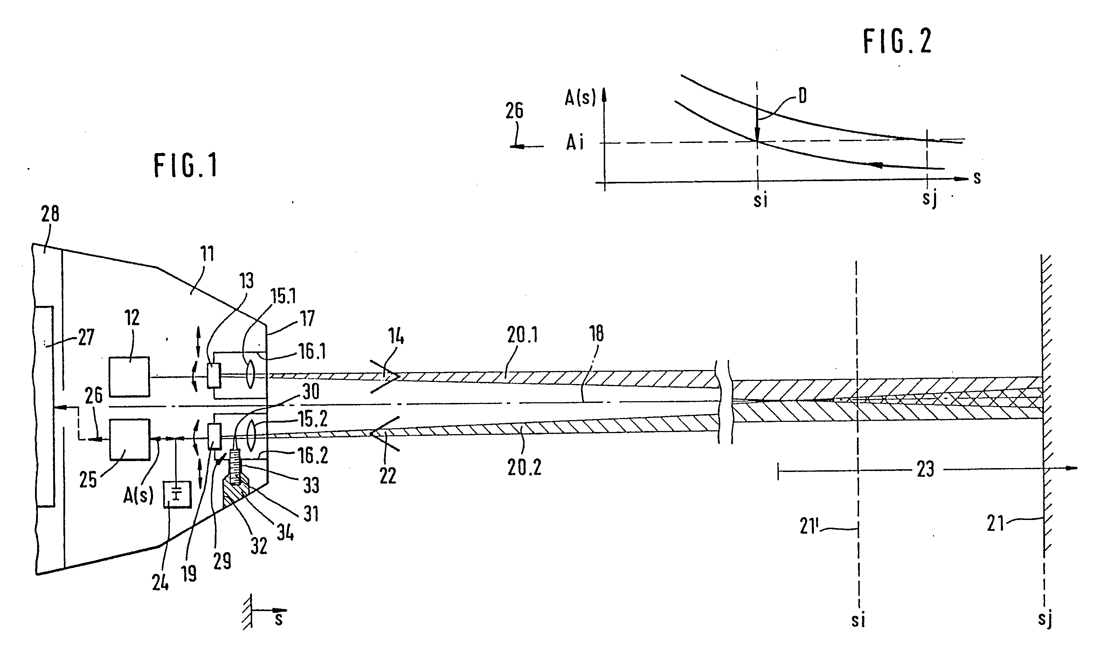

Der in Fig. 1 links skizzierte optronische Annäherungs-Zünder 11 weist eine Energiequelle 12 zum Betrieb eines optronischen Senders 13 auf, der Strahlungsenergie 14 im sichtbaren oder jenseits des sichtbaren Spektrums der elektromagnetischen Energie abstrahlt, der beispielsweise als Infrarotlicht emittierende Diode ausgelegt ist. Die gemäß der Sende-Charakteristik 20.1 ausgesandte Strahlungsenergie 14 wird mittels einer Sende-Optik 15.1 in einem Abschirmtubus 16.1 hinter der Stirn 17 des Zünders 11 gebündelt und um einen sehr spitzen Winkel gegenüber der Zünder-Längsachse 18 geneigt. In entsprechender Weise wird die Empfangs-Charakteristik 20.2 durch eine Empfangs-Optik 15.2 in einem Abschirmtubus 16.2 vor einem Empfänger 19 bestimmt, bei dem es sich für das angegebene Realisierungsbeispiel um einen Fototransistor oder um eine Fotodiode handeln kann, die aufgrund ihrer physikalischen Kennwerte bzw. aufgrund einer Ausbildung oder Beschichtung der Empfangs-Optik 15.2 selektiv für die Strahlungsenergie des Senders 13 empfindlich ist, die an einem die Oberfläche eines Zielobjektes simulierenden Reflektor 21 in den Verlauf der Empfangscharakteristik 20.2 als reflektierte Energie 22 zurückgeworfen wird.

Die Empfangsenergie 22 wird vom Empfänger 19 in ein elektrisches Signal der Amplitude $A(s)$ umgesetzt, wenn der Reflektor 21 sich im Überlappungsbereich 23 der Sende- und Empfangscharakteristiken 20.1, 20.2 befindet. Der Anteil an reflektierter und damit aufnehmbarer Energie 22 ist bei kleinen Öffnungswinkeln der Sende- und Empfangs-Charakteristiken 20.1, 20.2 und kleiner Basis (d.h. geringem Querabstand zwischen Sender 13 und Empfänger 19), also wenn der Überlappungsbereich keinen rautenförmigen Charakter hat, in erster Näherung umgekehrt quadratisch mit der Verringerung des Abstandes s des Reflektors 21 vom Zünder 11; wie in Fig. 2 durch die beiden 21 vom Zünder 11; wie in Fig. 2 durch die beiden Kurvenverläufe qualitativ zum Ausdruck gebracht, die entgegen der s-Achse (also bei Verringerung des Abstandes s) ansteigen. Denn die überlappungsQuerschnittsfläche der beiden Charakteristiken 20.1/20.1 wird bei der Reflektor-Annäherung zwar kleiner, aber andererseits steigt die Intensität der reflektierten Strahlung etwa mit dem Quadrat der Abstands-Verringerung. Diese entfernungsabhängige Amplitude $A(s)$ wird in ihrem Verlauf durch ein integrierendes Glättungsglied 24 hinter dem Empfänger 19 von höherfrequenten Schwankungen bereinigt, so daß sich ein relativ eindeutiger Schnittpunkt mit einer Zünd-Anspruchschwelle Ai ergibt, die in einer Auslöseschaltung 25 - etwa realisiert als Komparator oder als pegelgesteuerte Kippstufe -schaltungstechnisch vorgegeben ist. Wenn also die Empfangsamplitude $A(s)$ aufgrund entsprechender Verringerung des Abstandes zwischen Zünder 11 und Reflektor 21 diese Schwelle Ai überschreitet, soll die Auslöseschaltung 25 ein Zündsignal 26 an die Wirkladung 27 der mit diesem optronischen Annäherungs-Zünder 11 ausgestatteten Munition 28 liefern.

Das Zündsignal 26 soll spätestens ausgelöst werden, wenn der Zünder 11 sich - im Rahmen zulässiger Schwankungstoleranzen - bis auf einen Zündabstand si an ein Zielobjekt (in der Zeichnung repräsentiert durch den Reflektor 21') angenähert hat. Um das durch entsprechende Justage des Strahlenganges der Sende-Empfangs-Charakteristiken 20.1-20.2 sicherzustellen, ist als letzter Fertigungsschritt ein Abgleich erforderlich, der im wesentlichen aus einer mechanischen Relativpositionierung zwischen Sender 13 und Empfänger 19, sowie relativ zur Zünder-Längsachse 18, besteht; wie in der Zeichnung durch die linearen und gebogenen Doppelpfeile beim Sender 13 und beim Empfänger 19 symbolisch veranschaulicht. Ein Grobabgleich besteht aber darin, durch Verschieben und/ oder Verkippen des Senders 13 und/oder des Empfängers 19 einen derartigen Überlappungsbereich 23 der Sende-und Empfangs-Charakteristiken 20.1-20.2 sicherzustellen, daß in einer jenseits der Zündentfernung si liegenden Justageentfernung sj hinreichend viel Sendeenergie 14 reflektiert wird, um die Auslöseschaltung 25 zur Abgabe eines Zündsignales 26 zu aktivieren; wobei für diese Justage natürlich (entgegen Fig. 1) der Zünder 11 nicht mit einer scharfen Munition 28 bestückt ist. Wenn in einem Justageabstand sj jenseits des minimalen Zündabstandes si, aufgrund entsprechend eingerichteten Überlappungsbereiches 23, gerade ein Zündsignal 26 ausgelöst würde, liefert (wie aus Fig. 2 ersichtlich) die Empfangsamplitude $A(s)$ bei auf diesen Nenn-Zündabstand si innerhalb des Überlappungsbereich 23 herangeschobenem Reflektor 21' die Empfangsenergie 22 eine wesentlich über der Zündschwelle Ai liegende Amplitude $A(s)$. Deshalb folgt ein Feinabgleich, bei dem die Reflektion im Zündabstand si nun so weit gedrosselt wird, daß gerade bei diesem Zündabstand si erst die Zündschwelle Ai überschritten und damit das Zündsignal 26 ausgelöst wird.

Die Drosselung der Empfangsamplitude $4(s)$ erfolgt zweckmäßigerweise nicht durch Eingriff in die elektrische Empfangs- und Zündauslöseschaltung (wie etwa zur Einstellung der elektrischen Ansprechschwelle der Schaltung 25), da diese bei der Endjustage des Zünders 11 bereits ausgetestet und vergossen in den Zünder eingebaut, also nicht mehr für Justagemanipulationen zugänglich ist. Statt dessen erfolgt zur Dämpfung D der Empfangsamplitude $A(s)$ - siehe Fig. 2 -eine mechanische Querschnittsverjüngung der Empfangscharakteristik 20.2 im Strahleneingang zum als Empfänger 19 beispielsweise eingesetzten Phototransistor (bzw. -diode); und vorzugsweise im konzentrierten Strahlengang zwischen Empfangsoptik 15.2 und Empfänger 19. Dafür ist eine Blende 29 in Form einer in den Strahlengang der Empfangscharakteristik 20.2 mehr oder weniger tief eintauchenden Nadel 30 vorgesehen, die hinter der Zünder-Stirn 17 quer zur Empfangscharakteristik 20.2 verschiebbar gelagert und gehalten ist. Vorzugsweise ist die Nadel 30 an der Spitze einer Madenschraube 31 ausgebildet, die am Fuße einer peripheren Einsenkung 32 in ein Zylinderschrauben Durchgangsloch 33 eingeschraubt und in der passenden Tiefenstellung durch eine Klebe-Vergußmasse 34 dann sicher fixiert ist. Diese Tiefenstellung ist diejenige, die den lichten Querschnitt der Empfangs-Charakteristik 20.2 des Sende-Empfangs-Strahlenganges 20.1-20.2 gerade auf einen derartigen Restquerschnitt reduziert, daß gerade erst im Zündabstand si der nun wirksame Amplitudenverlauf A(s) die schaltungstechnisch vorgegebene Zündschwelle Ai übersteigt.

am Grunde einer Einsenkung (32) in einem Gewinde-Loch (33) gehaltert ist.

7. Zünder nach einem der Anspruch 4 - 6, dadurch gekennzeichnet, daß die Nadel (30) in ihrer Eintauchstellung durch eine Klebe-und Verguß-Masse (33) fixiert ist.

## Ansprüche

1. Optronischer Annäherungszünder (11) mit an einer Ziel-Oberfläche zu reflektierendem Strahlengang aus Sende- und Empfangs-Charakteristiken (20.1-20.2), dadurch gekennzeichnet, daß im Strahlengang eine mechanisch einstellbare Blende (29) angeordnet ist.

2. Zünder nach Anspruch 1, dadurch gekennzeichnet, daß die Blende in der Empfangs-Charakteristik (20.2) angeordnet ist.

3. Zünder nach Anspruch 2, dadurch gekennzeichnet, daß die Blende (29) vor dem Empfänger (19), vorzugsweise im Strahlengang (20.2) hinter seiner Empfangs-Optik (15.2) angeordnet ist.

4. Zünder nach einem der vorangehenden Ansprüche, dadurch gekennzeichnet, daß die Blende (29) als quer zum Strahlengang in die Charakteristik (20) eintauchende Nadel (30) ausgebildet ist.

5. Zünder nach Anspruch 4, dadurck gekennzeichnet, daß die Nadel (30) an der Stirn einer Schraube (31) angeordnet ist, die hinter der Zünder-Stirn (17) quer zur optischen Charakteristik (20) orientiert ist.

6. Zünder nach Anspruch 5, dadurch gekennzeichnet, daß eine Madenschraube (31) vorgesehen ist, die

**FIG.1**

**FIG.2**